# FASCICULE DE BREVET EUROPEEN

(11) **EP 2 057 027 B1**
(45) Date de publication et mention de la délivrance du brevet: **16.02.2011**
(21) Numéro de dépôt: 07823751.8
(22) Date de dépôt: 29.08.2007
(51) Int. Cl.: B60H 1/00

(54) **SYSTEME DE CLIMATISATION POUR VEHICULE AUTOMOBILE**
KLIMAANLAGENSYSTEM FÜR EIN AUTOMOBIL
AIR-CONDITIONING SYSTEM FOR A CAR

(30) Priorité: 30.08.2006 FR 0607624
(43) Date de publication de la demande: 13.05.2009
(73) Titulaire: Peugeot Citroën Automobiles SA, 78140 Vélizy-Villacoublay (FR)
(72) Inventeur: DUMOULIN, Pierre, F-92250 La Garenne Colombes (FR)
(74) Mandataire: Ménès, Catherine
(86) Numéro de dépôt international: PCT/FR2007/051852
(87) Numéro de publication internationale: WO 2008/025928

(56) Documents cités:
- EP-A2- 1 004 768
- DE-A1- 10 226 089
- DE-A1- 10 349 691
- FR-A1- 2 861 166
- US-A1- 2004 123 976

## Description

La présente invention concerne un système de climatisation pour véhicule automobile présentant des conditions de vie où le moteur thermique est arrêté en phase de roulage.

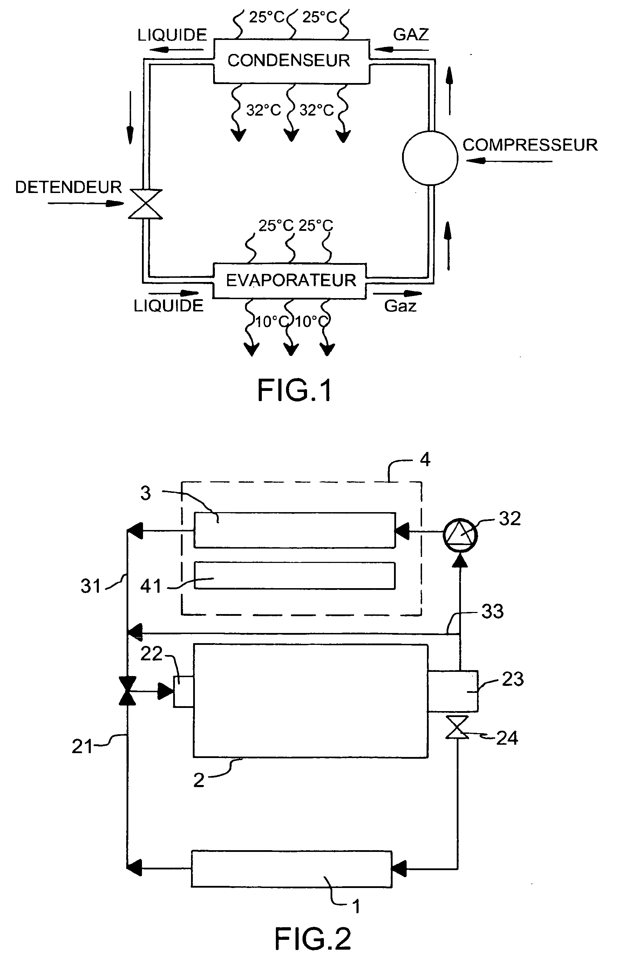

De manière générale, un système de climatisation destiné à refroidir l'habitacle d'un véhicule automobile, comprend un système échangeur comportant un évaporateur, un compresseur, un condenseur, un détendeur et un fluide susceptible de changer d'états : liquide / gaz , comme illustré sur le schéma de la figure 1.

Le compresseur : Directement entraîné par le moteur du véhicule à l'aide d'une courroie et d'une poulie, celui-ci comprime du fluide frigorigène, le refoulant sous haute pression et à haute température vers le condenseur.

Le condenseur : Grâce à une ventilation forcée, cet échangeur thermique provoque la condensation du gaz qui arrive à l'état gazeux en haute pression et haute température. Il le liquéfie grâce à l'abaissement de température de l'air qui le traverse.

L'évaporateur : C'est le dernier composant de l'installation de climatisation. C'est un échangeur thermique, comme le condenseur qui prélève des calories à l'air qui sera soufflé dans la cabine (il refroidit l'air et l'assèche). L'humidité prélevée dans l'air ruisselle sur les ailettes de l'évaporateur et est progressivement évacuée sous le véhicule.

Le détendeur : Le détendeur est un composant qui permet de réguler le débit d'entrée du gaz dans la boucle via une modification de section de passage dépendant de la température et de la pression au niveau de l'évaporateur.

Ainsi, l'air chaud venant de l'extérieur se refroidit en traversant l'évaporateur tout en s'asséchant également car l'humidité présente dans l'air extérieur se colle sur la surface froide de l'évaporateur.

Lorsque le moteur thermique est arrêté, le système de climatisation n'est plus opérationnel. Ce qui pose un problème pour des véhicules automobiles, qui dans leur utilisation, ont des coupures du moteur thermique fréquentes. Ainsi pour des applications dites « STT » (Stop and Start) dans lesquelles, le moteur thermique est arrêté durant de courts intervalles de temps, par exemple au feu rouge, un inconfort thermique peut être ressenti au-dessus d'une température d'air extérieur de 25°C (avec un ensoleillement significatif). La température d'air soufflée dans l'habitacle augmente de manière importante. Toutefois le point le plus bloquant est la ré-évaporation de l'eau stockée dans l'échangeur du groupe de climatisation produisant du froid, ce qui présente un grand inconfort pour l'utilisateur (bouffée d'humidité chaude dans le visage). Typiquement, lorsque le moteur thermique est opérationnel, correspondant à un roulage dit « classique », l'air au niveau de l'évaporateur se situe à environ 5°C. Moteur arrêté, la boucle de réfrigération s'arrête (compresseur arrêté), il y a alors un accroissement de la température d'air au niveau de l'évaporateur. Au-dessus de 15°C, l'eau stockée dans l'évaporateur se ré-évapore (et est apportée à l'habitacle).

L'une des solutions proposées est de réaliser un stockage via un sel à changement de phase dans l'évaporateur. Toutefois, cette solution présente entre autre les inconvénients suivants :
- dégradation du temps de convergence thermique de l'habitacle ;
- risque lié à la diversité des composants utilisés (multiplicité des modèles d'évaporateurs)
- risque lié au pilotage des compresseurs à contrôle externe
- diversité selon les différents réfrigérants utilisés

On connait de DE-10226089 un système de climatisation, pour véhicule automobile hybride comportant un moteur thermique pouvant être arrêté en phase de roulage, un circuit hydraulique et un groupe de climatisation comprenant un évaporateur et un aérotherme. Ce système comporte également des moyens pour dissocier la partie du circuit hydraulique d'alimentation du moteur thermique de la partie du circuit hydraulique d'alimentation de l'aérotherme, de sorte que le système de climatisation est opéré à partir d'un moteur électrique dédié lorsque le véhicule est opéré en mode électrique, moteur thermique à l'arrêt.

DE 103 49 691 divulgue un système selon le préambule de la revendication 1.

L'objet du brevet est de conserver un fonctionnement « classique » du circuit d'eau moteur et du groupe de climatisation en dehors de conditions de vie où la phase de stop peut potentiellement poser un problème de confort thermique en été. Dans ces conditions de vie l'aérotherme découplé du circuit d'eau moteur est alimenté en air sortant de l'évaporateur en phase de fonctionnement (stockage de froid dans l'aérotherme) et d'arrêt du moteur thermique (restitution de froid dans l'aérotherme).

L'aérotherme est un échangeur thermique dont la fonction est généralement de réchauffer l'air pulsé dans l'habitacle. Ce réchauffement est obtenu par un échange calorifique entre le liquide de la boucle chaude issue du circuit de refroidissement du moteur thermique et l'air pulsé dans l'habitacle. La figure 2 illustre le principe de fonctionnement actuel du circuit de refroidissement, configuration dans laquelle :
- d'une part, le circuit hydraulique de refroidissement du moteur thermique est associé de manière classique à un radiateur 1, au moteur thermique 2 et comprend une première partie 21 comportant une pompe à eau 22, un boîtier d'eau 23 et un thermostat 24 permettant de contrôler et de commander la circulation du liquide de refroidissement en sortie du moteur thermique 2. Le circuit hydraulique comprend également une seconde partie 31 comportant une pompe électrique 32 pour alimenter un aérotherme 3. Dans certaines applications un tuyau (dit de bypass) 33 est utilisé afin d'accroitre le débit d'eau interne moteur lorsque le thermostat moteur est fermé.
- d'autre part, le groupe de climatisation 4 comporte notamment un évaporateur 41 permettant d'envoyer de l'air refroidi dans l'aérotherme 3 qui le réchauffe.

Au-dessus d'une certaine température extérieure, le besoin de réchauffer l'air arrivant dans l'habitacle n'existe plus (l'air ne passe plus dans l'aérotherme, mais le bypass). Il est alors envisageable de détourner la fonctionnalité de base de l'aérotherme.

Dans ce contexte, la présente invention propose également d'utiliser l'aérotherme 3 pour refroidir l'air, lorsque le moteur thermique est coupé et ce avec des moyens astucieux de gestion hydraulique dans le circuit hydraulique de manière à optimiser la gestion des échanges de chaleur entre la température extérieure et la température en sortie de l'évaporateur.

Plus précisément, l'invention a pour objet un système de climatisation pour véhicule automobile conforme à l'objet de la revendication 1.

L'invention a donc pour objet un système de climatisation, pour véhicule automobile comportant un moteur thermique pouvant être arrêté en phase de roulage, un circuit hydraulique et un groupe de climatisation comprenant un évaporateur et un aérotherme, caractérisé en ce qu'il comporte des moyens pour dissocier la partie du circuit hydraulique d'alimentation du moteur thermique de la partie du circuit hydraulique d'alimentation de l'aérotherme permettant des phases dans lequel une circulation en circuit fermé de la partie alimentant l'aérotherme pour stocker des frigories qui sont restituées à l'air humide de l'évaporateur lors des phases d'arrêt du moteur thermique en phase de roulage.

Dans l'invention, les moyens pour dissocier la partie du circuit hydraulique d'alimentation du moteur thermique de la partie du circuit hydraulique d'alimentation de l'aérotherme comprennent une vanne à trois voies, permettant d'alimenter la partie du circuit hydraulique d'alimentation de l'aérotherme en circuit fermé, lorsqu'un besoin en refroidissement de l'habitacle est demandé.

Ainsi dissocié du circuit hydraulique moteur, le circuit d'eau aérotherme récupère des frigories en phase de fonctionnement du moteur et les restitue à l'air humide et chaud sortant de l'évaporateur inactif lors de l'arrêt du moteur qui se refroidit et s'assèche à son contact. Ce concept permet ainsi de limiter les gradiants de température et de limiter l'apport d'humidité à l'habitacle.

Selon une variante de l'invention dans laquelle le circuit d'eau moteur n'est pas équipé en série d'un tuyau de bypass , les moyens pour dissocier la partie du circuit hydraulique d'alimentation du moteur thermique, de la partie du circuit hydraulique d'alimentation de l'aérotherme comprennent deux conduits hydrauliques additionnels montés en parallèle ainsi qu'un clapet anti-retour et une vanne à trois voies.

Selon une variante de l'invention le système de climatisation comprend des moyens de dérivations.

Selon une variante de l'invention, le système de climatisation comprend des moyens de pilotage des circuits hydrauliques, de la pompe électrique et des moyens pour faire varier le débit d'air d'alimentation de l'aérotherme.

Selon une variante de l'invetion le système de climatisation est caractérisé en ce que la gestion de la vanne trois voies, de la pompe et du groupe de climatisation s'effectue selon les conditions ambiantes, les demandes client, voire les conditions de roulage du véhicule.

L'invention sera mieux comprise et d'autres avantages apparaitront à la lecture de la description qui va suivre donnée à titre non limitatif et grâce aux figures annexées parmi lesquelles :
- la figure 1, déjà décrite, illustre un dispositif de climatisation selon l'art connu ;
- la figure 2, déjà décrite, illustre un circuit de refroidissement moteur associé au groupe de climatisation selon l'art connu ;
- les figures 3a et 3b schématisent les évolutions de température d'air dans le groupe de climatisation en mode « apport de froid possible en mode de stop ». Ces températures sont données respectivement lorsque le moteur thermique fonctionne (aérotherme stockant du froid et réchauffant donc l'air) et lorsqu'il est à l'arrêt (aérotherme restituant du froid à l'air et donc l'asséchant et le refroidissant) ;
- les figures 4a, 4b et 4c illustrent une première variante du système de l'invention de manière structurelle et en mode respectivement estival et hivernal ;
- la figure 5 illustre une seconde variante de l'invention pour une application non équipée d'un « bypass » moteur.

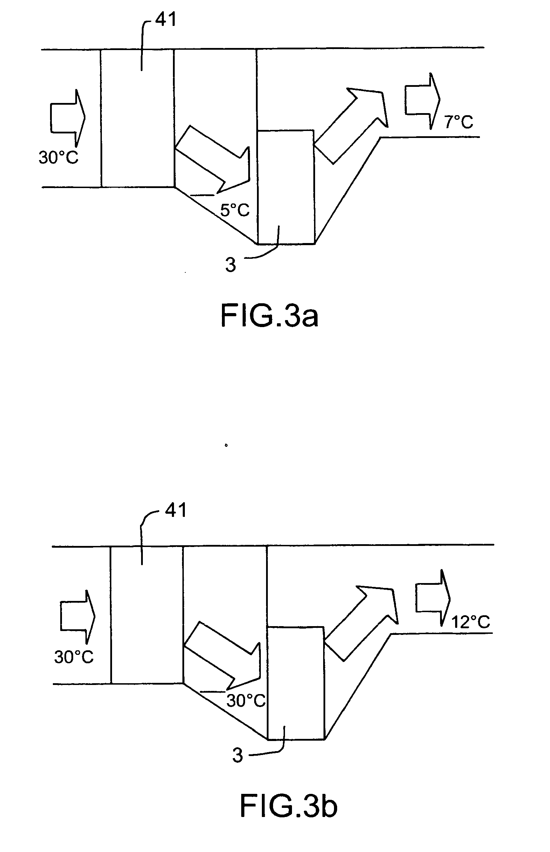

Le fonctionnement du système de climatisation selon l'invention est illustré sur les figures 3a et 3b. De manière connue, le dispositif de gestion du froid présent dans un véhicule automobile comprend un évaporateur pouvant générer de l'air refroidi. Comme illustré en figure 3a, sous l'action du moteur thermique, l'évaporateur 41 peut typiquement refroidir un air chaud à environ 30 °C, prélevé depuis l'extérieur, à une température d'environ 5 °C. Cet air refroidi est alors envoyé dans l'aérotherme 3 indépendant du circuit d'eau moteur stockant des frigories ce qui peut induire un réchauffement de la température de l'air le traversant, pouvant atteindre typiquement une température de 7°C.

Lorsque le moteur est coupé, comme illustré en figure 3b, l'évaporateur 41 n'est plus opérationnel, l'air rentrant à 30°C, ressort à 30°C, pour rentrer dans l'aérotherme 3 et bénéficier de l'inertie de ce dernier pour être refroidi, passant dans l'exemple illustré à une température de 12°C.

En dehors des phases où un « stockage de froid » est désiré au niveau de l'aérotherme le groupe de climatisation ainsi que le circuit d'eau moteur ont un fonctionnement similaire à une architecture non équipée de cette invention.

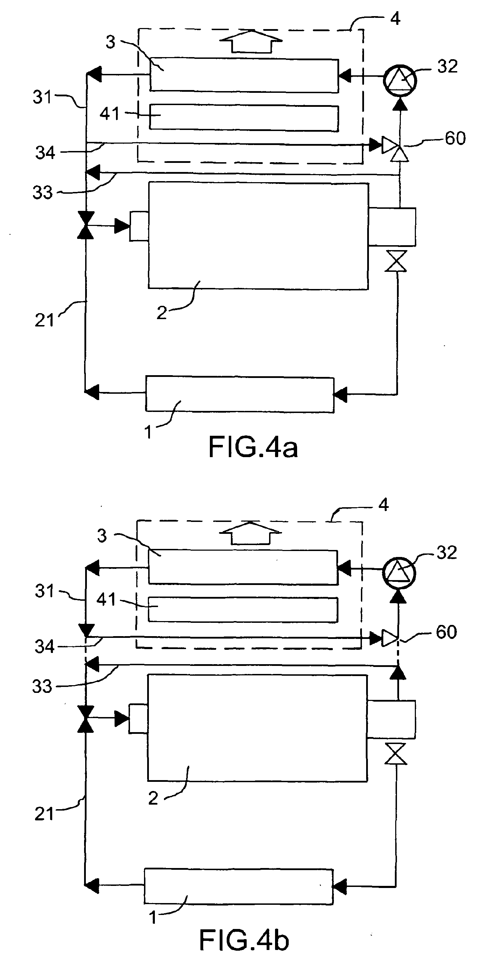

Le système de climatisation de l'invention est illustré schématiquement en figure 4a dans le cadre d'une application « bypass » moteur. Plus précisément dans cette configuration, le moteur équipé d'un bypass sur le circuit d'eau moteur présente la spécificité suivante : lorsque le thermostat moteur est fermé (c'est à dire lorsqu'il n'y a pas de débit dans le radiateur en face avant du véhicule), un gros débit d'eau est maintenu dans le moteur du fait du passage d'eau à la fois dans la branche aérotherme mais également par un tube à faible perte de charge.

Le circuit hydraulique est adapté et notamment des moyens tels qu'un second tuyau de circulation d'eau 34 en parallèle du tuyau 33 et des moyens de réglage de débit d'eau 60 dans le circuit hydraulique de l'aérotherme, permettent, de recycler l'eau à une température variable dans ledit circuit hydraulique de l'aérotherme.

Un flux d'air à une température donnée, traverse l'aérotherme pour ressortir sous forme de flux d'air à une température correspondant progressivement à une température stabilisée, définie pour être la température choisie d'air à diffuser dans l'habitacle. Typiquement à chaque passage de l'eau à une température donnée en amont de l'aérotherme, cette dernière ressort à une température moins élevée jusqu'à converger, permettant de réguler la température du flux d'air. Pour converger vers ce flux d'air à la température souhaitée, il est possible de piloter le pourcentage de débit d'eau traversant l'aérotherme selon le mode couplé ou non au circuit hydraulique du moteur, en réglant le débit d'eau par l'intermédiaire de la pompe électrique et de la vanne à trois voies, 60.

Pour converger vers cette température stabilisée, il est également proposé de faire varier le débit d'air introduit dans l'aérotherme, via un volet appelé « bypass » d'arrivée d'air dans l'aérotherme.

En mode estival, comme illustré en figure 4b, les circuits hydrauliques sont dissociés.

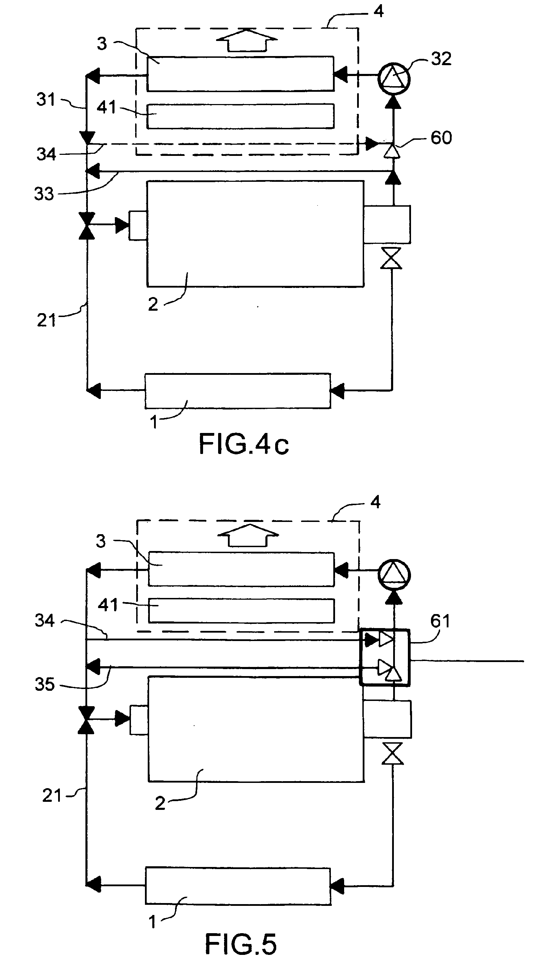

En mode hivernal, comme illustré en figure 4c, les circuits hydrauliques ne sont pas dissociés, le tuyau 34 n'est pas opérationnel (ce qui est schématisé par une ligne pointillée), la vanne 60 est donc dans un état permettant la circulation entre le circuit hydraulique d'alimentation du moteur thermique et le circuit hydraulique d'alimentation de l'aérotherme.

La figure 5 illustre une seconde variante de l'invention dans le cadre d'un moteur non équipé d'un « bypass » moteur. Plus précisément dans cette configuration, le moteur non équipé d'un bypass sur le circuit d'eau moteur présente la spécificité suivante : lorsque le thermostat moteur est fermé (c'est-à-dire lorsqu'il n'y a pas de débit dans le radiateur en face avant du véhicule), l'intégralité du débit d'eau traversant le moteur circule dans la branche aérotherme. La présence d'un débit d'eau minimum dans le moteur est nécessaire afin d'assurer son bon fonctionnement.

Des moyens tels qu'un second tuyau de circulation d'eau 34 en parallèle d'un tuyau 35 et des moyens de réglage de débit d'eau 61 dans le circuit hydraulique de l'aérotherme, permettent de recycler l'eau dans le circuit hydraulique de l'aérotherme à une température différente de celle circulant dans le moteur.

Les échanges thermiques peuvent avoir lieu pendant toute la durée d'arrêt du moteur thermique. Un flux d'air à une température donnée, traverse l'aérotherme pour ressortir sous forme de flux d'air à une température correspondant progressivement à une température stabilisée, définie pour être le température choisie d'air à diffuser dans l'habitacle. Typiquement à chaque passage de l'eau à une température donnée en amont de l'aérotherme, cette dernière ressort à une température moins élevée jusqu'à converger vers une température déterminée, permettant de réguler la température du flux d'air . Pour converger vers ce flux d'air à la température souhaitée, il est possible de piloter le pourcentage de débit d'eau traversant l'aérotherme selon le mode couplé ou non au circuit hydraulique du moteur, en réglant le débit d'eau par l'intermédiaire de la pompe électrique et de la vanne à trois voies + clapet anti-retour, 61.

Pour converger vers cette température stabilisée, il est également proposé de faire varier le débit d'air introduit dans l'aérotherme, via un volet (non représenté) appelé « bypass » d'arrivée d'air dans l'aérotherme.

### Application du système de climatisation à des véhicules automobiles dit de type « Hybride »

Dans ce type d'application, le moteur thermique est arrêté pour laisser le relais au moteur électrique. En pratique, pour arrêter le moteur, il faut que l'autorisation de stocker du froid dans la branche aérotherme soit effectuée et que le système soit à peu près chargé.

La recharge du système (utilisé en phase estivale) doit s'effectuer de manière progressive afin de permettre une dégradation minime de l'évolution de la température d'air soufflé pendant que le moteur est en fonctionnement.

### 1) 1^{er} temps : volonté d'assurer un refroidissement du passager maximal

Pendant la phase de convergence relative à la période pendant laquelle la température d'air soufflé (ou température de l'habitacle) est supérieure à la température cible, l'objectif est d'assurer une réduction de la température d'air soufflé la plus proche de celle qui serait obtenue avec une application non équipé du système proposé ci joint. Cela s'effectue en arrêtant le débit d'eau dans l'aérotherme et/ou arrêtant le débit d'air traversant l'aérotherme.

### 2)2^{nd} temps : début de charge du système

Progressivement la pompe à eau électrique et/ou le volet de bypass de l'aérotherme s'ouvre afin de charger le système tout en maintenant une température d'air soufflé basse

### 3) 3^{ème} temps : fonctionnement optimal du système

Une fois le stockage rechargé (eau présente dans l'aérotherme refroidie) le fonctionnement est le suivant (moteur thermique arrêté ou non)
o pompe à eau électrique alimentée
o volet de bypass de l'aérotherme en position ouverte (air sortant de l'évaporateur arrivant dans l'aérotherme)
o circuit d'eau aérotherme découplé du circuit d'eau moteur

Le système de climatisation de l'invention a été présenté dans le cadre d'un arrêt du moteur thermique et une recherche de rafraichissement de l'habitacle. Néanmoins, les mêmes composants sont utilisés que l'on cherche à chauffer l'habitacle ou à le refroidir. C'est pourquoi, il est proposé un exemple de protocole ci-après de gestion des actionneurs du système de l'invention quelles que soient les conditions d'utilisation du véhicule.
- Pilotage du volet de mixage aérotherme :
   o Lorsque la température extérieure est inférieure à 25°C : le volet d'air conserve la stratégie de fonctionnement actuelle (débit d'air dans l'aérotherme pour chauffer l'habitacle ou désembuer). Selon le besoin en calorie la position du volet varie.
   o Lorsque la température est supérieure à 25°C et le système de stockage chargé : 100% du débit d'air traverse l'aérotherme
   o Lorsque la température extérieure est supérieure à 25°C et le système de stockage est en débit de chargement (avant le 1^{er} stop): le volet de mixage s'ouvre progressivement (pour accumuler le froid dans le circuit d'eau)
- Pilotage de la pompe à eau électrique:
   o En hiver, lorsque le moteur est arrêté, le maintien en circulation d'eau dans l'aérotherme via la pompe à eau électrique permet de maintenir l'apport d'air chaud à l'habitacle (car en hiver tout l'air circule par défaut dans l'aérotherme afin de récupérer des calories)
   o Lorsque la température extérieure est supérieure à 25°C et la phase de convergence finie, la pompe à eau électrique est alimentée. Durant la phase de convergence la pompe peut être arrêtée/alimentée de manière alternative (afin d'assurer une recharge couplée à une chute nette de la température de l'air soufflé au démarrage)
   o En dehors de ces conditions de vie, sauf besoin de désembuage, la pompe à eau électrique est arrêtée
- Pilotage de la vanne trois voies pour dissocier les deux parties du circuit hydraulique :
   o Lorsque la température extérieure est supérieure à 25°C, sans demande de chauffage, les deux circuits (moteur/aérotherme) hydrauliques sont découplés
   o Lorsque la température extérieure est inférieure à la température demandée dans l'habitacle et qu'il peut donc y avoir un besoin en chaleur à tout instant dans l'habitacle, les deux circuits hydrauliques ne sont pas découplés

## Revendications

1. Système de climatisation pour véhicule automobile comportant un moteur thermique (2) pouvant être arrêté en phase de roulage, un circuit hydraulique et un groupe de climatisation comprenant un évaporateur (41) et un aérotherme (3), ledit système comportant deux conduits hydrauliques montés en parallèle (33, 34, 35) pour dissocier la partie du circuit hydraulique (21) d'alimentation du moteur thermique de la partie du circuit hydraulique (31) d'alimentation de l'aérotherme (3) et stocker dans l'aérotherme (3) des frigories alors que le moteur thermique n'est pas à l'arrêt, qui sont restituées à l'air humide de l'évaporateur lors des phases d'arrêt du moteur thermique en phase de roulage, **caractérisé en ce que** les moyens pour dissocier la partie du circuit hydraulique (21) d'alimentation du moteur thermique (2) de la partie du circuit hydraulique (31) d'alimentation de l'aérotherme (3) comprennent une vanne à trois voies (60,61), permettant d'alimenter la partie du circuit hydraulique (31) d'alimentation de l'aérotherme (3) en circuit fermé pour dissocier la partie du circuit hydraulique (21) d'alimentation du moteur thermique (2) de la partie du circuit hydraulique (31) d'alimentation de l'aérotherme (3).

2. Système de climatisation selon la revendication 1, **caractérisé en ce que** les moyens pour dissocier la partie du circuit hydraulique (21) d'alimentation du moteur thermique (2) de la partie du circuit hydraulique (31) d'alimentation de l'aérotherme (3) comprennent au moins un clapet anti-retour.

3. Système de climatisation selon la revendication 1 ou la revendication 2, **caractérisé en ce que** la partie du circuit hydraulique (31) d'alimentation de l'aérotherme (3) comprend une pompe électrique (32).

4. Système de climatisation selon l'une des revendications 1 à 3, **caractérisé en ce qu'**il comporte des moyens permettant de faire varier le débit d'air d'alimentation de l'aérotherme (3).

5. Système de climatisation selon l'une des revendications 1 à 4, **caractérisé en ce que** la partie du circuit hydraulique (21) d'alimentation du moteur thermique (2) comprend des moyens de dérivation.

6. Système de climatisation selon la revendication 3, **caractérisé en ce qu'**il comprend en outre des moyens de pilotage des circuits hydrauliques (21, 31), de la pompe électrique (32) et des moyens pour faire varier le débit d'air d'alimentation de l'aérotherme (3).

7. Système de climatisation selon l'une des revendications 1 à 6, **caractérisé en ce que** la gestion de la vanne trois voies, de la pompe et du groupe de climatisation s'effectue selon les conditions ambiantes, les demandes client, voire les conditions de roulage du véhicule.

## Claims

1. Air conditioning system for a motor vehicle, comprising a heat engine (2) which can be stopped in the driving phase, a hydraulic circuit and an air conditioning unit comprising an evaporator (41) and a unit heater (3), said system comprising two parallel-mounted hydraulic conduits (33, 34, 35) for dissociating the part of the hydraulic circuit (21) supplying the heat engine from the part of the hydraulic circuit (31) supplying the unit heater and for storing frigories in the unit heater (3) when the heat engine is not stopped, said frigories being returned to the humid air of the evaporator during the stopped phases of the heat engine in the driving phase, **characterised in that** the means for dissociating the part of the hydraulic circuit (21) supplying the heat engine (2) from the part of the hydraulic circuit (31) supplying the unit heater (3) comprise a three-way valve (60, 61) making it possible to supply the part of the hydraulic circuit (31) supplying the unit heater (3) in a closed circuit so as to dissociate the part of the hydraulic circuit (21) supplying the heat engine (2) from the part of the hydraulic circuit (31) supplying the unit heater (3).

2. Air conditioning system according to claim 1, **characterised in that** the means for dissociating the part of the hydraulic circuit (21) supplying the heat engine (2) from the part of the hydraulic circuit (31) supplying the unit heater (3) comprise at least one non-return valve.

3. Air conditioning system according to claim 1 or claim 2, **characterised in that** the part of the hydraulic circuit (31) supplying the unit heater (3) comprises an electric pump (32).

4. Air conditioning system according to one of claims 1 to 3, **characterised in that** it comprises means making it possible to vary the flow rate of air supplying the unit heater (3).

5. Air conditioning system according to one of claims 1 to 4, **characterised in that** the part of the hydraulic circuit (21) supplying the heat engine (2) comprises branching means.

6. Air conditioning system according to claim 3, **characterised in that** it additionally comprises means for controlling the hydraulic circuits (21, 31), the electric pump (32) and the means for varying the flow rate of air supplying the unit heater (3).

7. Air conditioning system according to one of claims 1 to 6, **characterised in that** the management of the three-way valve, of the pump and of the air conditioning unit takes place according to the ambient conditions, the client requirements or even the driving conditions of the vehicle.

## Patentansprüche

1. Klimaanlage für Kraftfahrzeuge, umfassend einen Verbrennungsmotor (2), der in der Phase des Fahrens angehalten werden kann, einen Hydraulikkreis und ein Klimaaggregat, das einen Verdampfer (41) und einen Thermoblock (3) umfasst, wobei die Anlage zwei parallel montierte Hydraulikleitungen (33, 34, 35) umfasst, um den Teil des Hydraulikkreises (21) zur Versorgung des Verbrennungsmotors von dem Teil des Hydraulikkreises (31) zur Versorgung des Thermoblocks (3) zu trennen und in dem Thermoblock (3), während der Verbrennungsmotor nicht stillsteht, Frigorien zu speichern, die während der Stillstandphasen des Verbrennungsmotors in der Phase des Fahrens an die feuchte Lucht des Verdampfers zurückgegeben werden, **dadurch gekennzeichnet, dass** die Mittel zum Trennen des Teils des Hydraulikkreises (21) zur Versorgung des Verbrennungsmotors (2) von dem Teil des Hydraulikkreises (31) zur Versorgung des Thermoblocks (3) ein Dreiwegeventil (60, 61) umfassen, das es ermöglicht, den Teil des Hydraulikkreises (31) zur Versorgung des Thermoblocks (3) im geschlossenen Kreislauf zu versorgen, um den Teil des Hydraulikkreises (21) zur Versorgung des Verbrennungsmotors (2) von dem Teil des Hydraulikkreises (31) zur Versorgung des Thermoblocks (3) zu trennen.

2. Klimaanlage nach Anspruch 1, **dadurch gekennzeichnet, dass** die Mittel zum Trennen des Teils des Hydraulikkreises (21) zur Versorgung des Verbrennungsmotors (2) von dem Teil des Hydraulikkreises (31) zur Versorgung des Thermoblocks (3) mindestens ein Rückschlagventil umfassen.

3. Klimaanlage nach Anspruch 1 oder 2, **dadurch gekennzeichnet, dass** der Teil des Hydraulikkreises (31) zur Versorgung des Thermoblocks (3) eine Elektropumpe (32) umfasst.

4. Klimaanlage nach einem der Ansprüche 1 bis 3, **dadurch gekennzeichnet, dass** sie Mittel umfasst, die es ermöglichen, den Luftdurchsatz zur Versorgung des Thermoblocks (3) zu verändern.

5. Klimaanlage nach einem der Ansprüche 1 bis 4, **dadurch gekennzeichnet, dass** der Teil des Hydraulikkreises (21) zur Versorgung des Verbrennungsmotors (2) Umleitungsmittel umfasst.

6. Klimaanlage nach Anspruch 3, **dadurch gekennzeichnet, dass** sie ferner Mittel zum Ansteuern der Hydraulikkreise (21, 31), der Elektropumpe (32) und der Mittel zum Verändern des Luftdurchsatzes zur Versorgung des Thermoblocks (3) umfasst.

7. Klimaanlage nach einem der Ansprüche 1 bis 6, **dadurch gekennzeichnet, dass** die Handhabung des Dreiwegeventils, der Pumpe und des Klimaaggregats gemäß den Umgebungsbedingungen, den Kundenwünschen oder sogar den Fahrtbedingungen des Fahrzeugs erfolgt.
